Europäisches Patentamt

European Patent Office

Office européen des brevets

(19)

(11) Publication number: **0 014 722**
**B1**

(12) **EUROPEAN PATENT SPECIFICATION**

(45) Date of publication of patent specification: **27.04.83**

(51) Int. Cl.³: **C 02 F 3/12, C 02 F 1/04**

(21) Application number: **78300653.9**

(22) Date of filing: **21.11.78**

(54) Process for treating organic waste.

(43) Date of publication of application:
**03.09.80 Bulletin 80/18**

(45) Publication of the grant of the patent:
**27.04.83 Bulletin 83/17**

(84) Designated Contracting States:
**BE CH DE FR GB LU NL SE**

(56) References cited:
**FR - A - 2 102 984**
**FR - A - 2 226 206**
**FR - A - 2 246 502**
**US - A - 3 271 304**
**US - A - 3 379 311**
**US - A - 3 821 107**

(73) Proprietor: **Claunch, Robert W.**
**1509 First Parkway 1st Parkway**
**Washington, MO 63090 (US)**

(73) Proprietor: **Connelly, Robert Frederick**
**International Technical Development Inc. Shimato**
**Building 8F No. 5-34 8-chome Akasaka**
**Minato-ku, Tokyo 107 (JP)**

(73) Proprietor: **Deane, Thomas N.**
**1317 Seventh Street**
**New Orleans, LA 70115 (US)**

(73) Proprietor: **Rogan, Patrick D.M.**
**1311 Lowerline St.**
**New Orleans Louisiana 70118 (US)**

(72) Inventor: **Claunch, Robert W.**
**1509 First Parkway 1st Parkway**
**Washington, MO 63090 (US)**
Inventor: **Connelly, Robert Frederick**
**International Technical Development Inc. Shimato**
**Building 8F No. 5-34 8-chome Akasaka**
**Minato-ku, Tokyo 107 (JP)**
Inventor: **Deane, Thomas N.**
**1317 Seventh Street**
**New Orleans, LA 70115 (US)**
Inventor: **Rogan, Patrick D.M.**
**1311 Lowerline St.**
**New Orleans Louisiana 70118 (US)**

Courier Press, Leamington Spa, England

(74) Representative: **Warden, John Christopher et al,**
**R.G.C. Jenkins & Co. 12-15, Fetter Lane**
**London EC4A 1PL (GB)**

Process for treating organic waste

The present invention relates to waste disposal systems for digesting and evaporating human or other organic wastes. These wastes may for example come from oil flush toilets, foam flush toilets, low flush toilets or conventional toilets or from combined domestic wastes. The present invention is more particularly directed toward a thermophilic evaporator-digestor system in which the wastes are subjected to aeration at high temperatures, with the result that they are digested and evaporated.

The process of the present invention was developed as an alternative method for the disposal of human wastes. These wastes may come from any number of sources such as combined municipal sewerage, mixed domestic wastes, or the segregated wastes from conventional toilets. However, since this device requires sufficient heat to evaporate the water therein contained, it is most efficiently applied to the elimination of wastes containing the minimum admixture of water for flushing.

One example of such a toilet is the oil flush toilet, as taught by Claunch, in US—A—3,673,614 and 3,974,528, entitled "Sewage System with Refusable Flush Medium".

Another toilet system with which the present device has been tested is the "foam-flush toilet" as taught by Masami Miya in US—A—3,585,649.

Various other low-flush toilets can be used with this device, for example the low-flush toilet as taught by Burton in JP—A—27927/75. In this latter case, the thermophilic evaporator-digestor would take the place of the redwood filter device as taught by Burton in JP—A—831225.

FR—A—2,246,502 discloses a thermophilic digestor and a process in which the waste is finely divided and suspended with added water, the suspension being agitated during aeration and digestion at elevated temperatures of for example 50 to 70°C. The water and humic residue resulting are then disposed of together to the soil or the water is separated for separate disposal. The supply of air during the digestion is carefully controlled.

In FR—A—2,226,206, there is disclosed a process in which waste in the form of a mass of fibrous, damp solids is subjected to aerobic degradation in a rotating drum. Air is passed over the tumbling solids. The exothermic heat generated by the process is conserved by limiting the air supply to the drum and heating the air supply by means of a heat exchanger to which warm effluent air from the process is supplied.

US—A—3,379,311 discloses a sewage treatment system in which the waste is macerated and subjected to aerobic digestion, then allowed to settle so that water can be decanted off and recycled as flush water.

In none of the above processes is a substantial proportion of the waste disposed of by evaporation.

The present invention provides a process for disposing of organic waste material wherein the said material is subjected in a treatment vessel to digestion by thermophilic bacteria with controlled heating and aeration characterized in that said heating and aeration are carried out simultaneously with evaporation of water from the treated waste, air being brought into contact with said waste material at a rate sufficient to remove water by evaporation from said vessel at a rate at least equal to the combined rate of introduction of water and formation thereof by aerobic digestion of the waste material.

This invention uses the phenomena of evaporating water at elevated temperature and supporting aerobic high-temperature bacterial activity, both dependent upon aeration of the wastes at said elevated temperatures.

In a literature search for an elevated temperature which would inactivate the more common pathogenic bacteria, it was determined that certain strains of non-pathogenic, high-temperature compatible micro-organisms have been isolated. It was further discovered that the thermophilic micro-organisms exhibit beneficial characteristics enabling them to metabolize organic substances at elevated temperatures, for example above 50°C. It was, therefore, theorized in the present invention that a combination of elevated temperature and airflow could be employed in such a manner that the thermophilic bacteria would be maintained in the aerobic state, organic waste substances would be metabolized, pathogenic micro-organisms would be deactivated, and the water in the wastes would be evaporated.

Undiluted human waste contains approximately 95% water. The remaining 5% consists primarily of a mixture of organic compounds and inorganic salts. It was theorized that, by aerating these waste mixtures at elevated temperatures, it would be possible to metabolize the organic compounds to carbon dioxide, water, nitrates, nitrites, volatile oxides of nitrogen, and sulphites and sulphates. Under the condition of aeration, all of the volatile products of metabolism, including the water, could be swept out of the mixture.

Claunch teaches the use of an incinerator to dispose of the wastes from an oil flush toilet. However, the energy required to incinerate mixed human wastes is excessive and the substances are quite corrosive and result in a very intractable situation for materials selection. On the other hand, the present invention allows digestion and evaporation at temperatures well below the boiling point of water, so that numerous sources of heat can be employed, and the material selection problem is greatly simplified.

The residue (brine) which remains after digestion and evaporation is a nearly inert mixture of inorganic salts, water, and non-pathogenic organisms, and is devoid of offensive odors. The residual brine may be infrequently disposed of without difficulty.

As a source of heat, the present invention functions effectively with various sources of waste heat, such as the heat from internal combustion engines, the residual heat in the steam condensate, and numerous other sources of heat which are not far enough above ambient temperature to be beneficial in most circumstances. Also, solar heat from a simple collector can be employed in this technique. However, even when commercial heat sources such as electricity, natural gas, liquified petroleum gas (LPG), or fuel oil are employed, the costs for the disposals of the waste are substantially lower than are found with incineration.

It is thus possible by means of the present invention to provide a simple, low cost, energy efficient means for disposing of human wastes from oil flush, foam flush, air flush, vacuum flush or other low flush toilets, and to dispose of other organic sludges or concentrated wastes such as animal fecal matter, slaughterhouse wastes, and a wide variety of animal and vegetable wastes from food processing activities.

The treatment vessel is preferably insulated against thermal losses.

It should be understood that the term "aeration" applies to the intermixing of air (or other oxygen-containing carrier gas) with a liquid such as human waste sewerage or other organic wastes. A process of aeration causes oxygen to dissolve in the liquid, thereby supporting the metabolism of aerobic micro-organisms contained in the mixture. This process also differs from other aerobic digestors in that the heat source is required to maintain the mixture at a temperature at which thermophilic biological activity takes place. This heat source also supplies sufficient heat energy to satisfy the latent heat of vaporization of the water contained within the mixture.

The evaporation of water at a rate at least equal to the input of waste is of prime importance. The high temperature is primarily for the increase in water vapor evaporated per kilogram of air, for example:

| Temperature | % Water in Air by Weight |
| --- | --- |
| 21°C | 1.6% |
| 60°C | 15.2% |
| 71°C | 29.6% |

The methods currently in use employ the pressurization of an air stream with devices such as a piston pump, a vane pump, diaphragm pump or vane axial fan, or a combination of these devices, and then releasing that air into the waste at or near the bottom of the enclosed vessel. With respect to transferring oxygen into the mixture, finely divided air bubbles are among the more efficient manners for bringing about the oxygen transfer into the liquid. For satisfying the evaporation requirements of the mixture, a lesser intensity of contact is sufficient.

The exposure of waste to the air may also be accomplished by such known devices as biodisc or absorbent belts such as are used in room humidifiers. In such cases, it is possible to satisfy the evaporation and oxygen transfer requirements of the mixture at much lower air stream pressures, since the air need not be pressurized to a level at which it can be bubbled under the surface of the liquid.

The heat energy requirements may be introduced into the mixture by any of the known methods for transferring heat into water, conductive, radiative or convective. When direct electrical heat is employed, it is necessary to use low watt density heating elements with a density of 5 watts per sq. centimeter or less. If high watt density heaters are employed, the high temperatures generated in the immediate area of the heating element can destroy the thermophilic micro-organisms, resulting in a breakdown in the digestor phase of this process. In addition, there is a tendency for sludge to form on the high watt density heating elements, creating a serious service problem. Heat may also be introduced by circulating hot water around or through the vessel in such a way that heat will be transferred from the circulating stream into the organic wastes. The heated water stream may come from a gas, LPG or fuel oil burning device, from a solar collector, from the cooling line of an internal combustion engine, a steam condensate return, or other source. It is also possible to employ a heat transfer liquid such as one of the stable organic heat transfer media, instead of water. The vessel may also be heated by direct firing or by exposure to engine exhaust vapors, provided that they can be introduced in such a way that high surface temperature can be avoided. Generally speaking, when employing direct firing or engine exhaust gases, it has been found safer to employ the "double boiler" technique in which the waste liquid is protected from spot over-heating by the interposition of a layer of plain water or other heat transfer medium.

As the waste is introduced into the evaporator-digestor vessel, it is quickly raised to the temperature of the vessel, causing the facultative thermophilic bacteria to become aerobic, or obligating the aerobic thermophilic bacteria to become active. The strictly anaerobic bacteria are quickly attenuated and die. In the preferred environment of the thermophilic evaporator-digestor vessel, the wastes are contained therein and held at elevated temperatures for more than 24 hours, with the result that the common pathogenic mesophilic bacteria are destroyed. The active biomass is, therefore, made up of thermophilic bacteria which may have been dormant in the human digestive tract. Or, it is possible to culture selective series in the laboratory and introduce them into the evaporator-digestor vessel. Since the biomass is made up of aerobic thermophilic bacteria, and since the waste is supplied with excess of oxygen, on introduction of the organic wastes or other nutrient material, the organisms metabolize these wastes, converting them to carbon dioxide, water, and a brine containing relatively inert bioskeletons.

As the air is passed through the evaporator-digestor vessel, it is heated to the temperature of the process and becomes saturated with water at the temperature of the vessel. Heat must therefore be supplied to the vessel at such a rate as to make up for the heat loss as liquid water is converted to vapor. The saturated air at the elevated temperature then leaves the tank through a vent, carrying away with it a substantial amount of the water contained in the original waste. Reference to a psychometric chart will show the potential water increase at saturation over the temperature range employed. For example, at 21°C, for each kilogram of dry air the maximum content of water is 16 grams. At 57°C, saturated air contains approximately 130 grams of water per kilogram of dry air. Therefore, if ambient air at 21°C and 100% relative humidity were to be introduced into the evaporator-digestor vessel and maintained at 57°C, each kilogram of air would be capable of removing 114 grams of water.

As waste is introduced, heat and air are added to promote evaporation and sustain thermophilic aerobic biological activity. The air supply should be provided at a rate commensurate with the supply of waste material. The temperature may be adjusted to accommodate a particular strain of bacteria, ambient air conditions, percent of organic substances or other criteria that may be established as a function of design criteria. A temperature of 58°C has been calculated as an optimum average temperature to balance the oxygen requirements with the evaporation requirements.

The process tank will, therefore, receive waste at such a rate that the tank level remains nearly constant and the solids build up is very slow because of the biological reduction of solids. These solids which will not be biodegraded are salts and inorganic materials. At some time in the process, these materials will reach such a level as to require that they be removed and disposed of such as is required with ash from an incinerator. Thus, in summary, the present invention involves the evaporation of water through the saturation of air, and the use of aerobic thermophilic micro-organisms to metabolize organic substances in the waste treatment system, thereby reducing said organic substances to water and carbon dioxide, said evaporation and reduction taking place at elevated temperatures below 100°C.

The present invention obtains, *inter alia*, the following results:

a) By elevating the temperature of the waste and passing an air stream through or over the waste so that the air stream becomes saturated with moisture at that temperature, a significant amount of water may be removed.

b) By maintaining elevated temperatures in the evaporator over a period of many hours, the pathogenic organisms and viruses are destroyed rendering a pathogenically sterile sludge;

c) By creating aerobic thermophilic biological digestion, a greater reduction in organic substances may be effected than by standard mesophilic anerobic waste digestion; and

d) The disposal of concentrated waste forms such as waste collected in an oil flush or minimum flush toilet may be done more economically and with greater safety.

Preferred embodiments of the invention will now be described with reference to the accompanying drawings wherein:

Figure 1 shows schematically a preferred apparatus for carrying out the process of the invention principally employing electrical heat and thermostats to control heat, air flow and liquid level;

Figure 2 shows a second embodiment principally employing heat transfer fluid conveyed through a coil;

Figure 3 shows a further embodiment using small continuous duty air pump for maintaining aerobic conditions and an intermittent duty centrifugal blower, vane axial fan, or other lower pressure source for evaporation of water; and

Figure 4 shows the electrical control system of Figure 1.

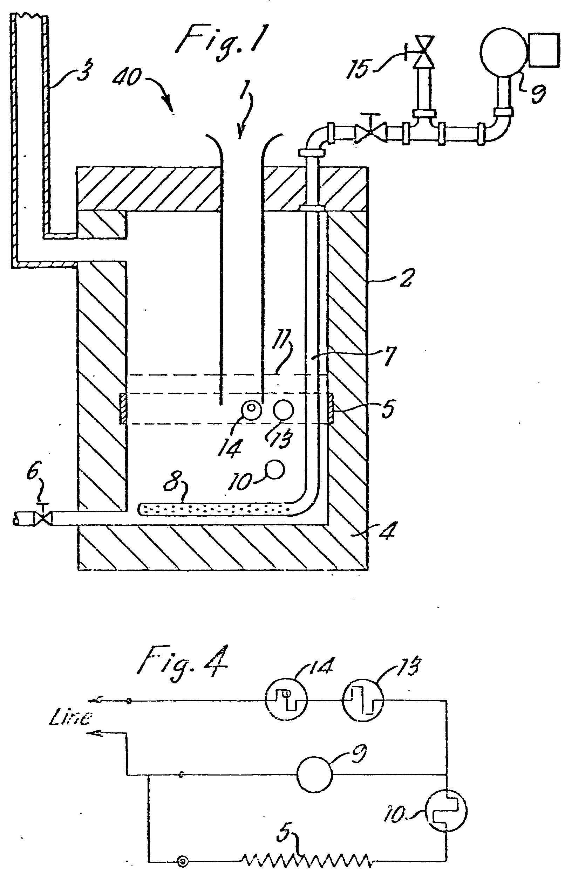

A preferred apparatus for carrying out the process of the present invention, designated generally by the numeral 40 in Figure 1, is comprised generally of a fluid tight vessel 2 provided with a waste material inlet 1 and a vent outlet 3. Air can be introduced to the inside portion of the tank through an air diffuser 8 which receives air through pipe 7 from air pump 9.

Tank 2 can be provided with insulative material 4 to minimize the loss of heat from within tank 2. Tank 2 is provided with heat source 5 which can be, for example, a peripheral coil which allows heat to be transferred as necessary to the inner portion of tank 2 and thus elevate and control the temperature of any material contained therein.

Heat source 5 provides necessary heat energy to elevate the temperature of waste material 11 to a temperature range as desired. Thermostat 10 on outer surface of the tank can be provided to sense the temperature within the waste material 11, and dictate the amount of heat energy which will then be input into waste material 11. Thus, waste material 11 will be maintained in a desired temperature span, as will be more fully discussed hereinafter notwithstanding the fact that air will be input through diffuser 8 in varying temperatures, and additionally, waste materials of lower temperatures (generally) will be constantly or intermittently introduced to tank 2 through inlet 1.

If waste level drops below heater 5, thermostat 13 on exterior of the heat belt turns air and heat off at a temperature 20°C higher than that maintained when waste is covering heater area of tank 2. Thermostat 13 resets at a temperature slightly below operating temperature. Manually reset thermostat 14 shuts system down should heat belt become destructively overheated.

Figure 4 describes the electrical circuit of Figure 1. As condensation of moisture from the hot saturated air could be a problem in colder climates, vent 3 can be insulated to reduce cooling of the air in the vent. In installations where excessive vent length or other factors cause condensation to persist, a trap can be placed in the vent and the condensate drained off as a clear waste liquid for disposal.

Air is supplied by means of air pump 9 and is conveyed through pipe 7 to air diffuser 8. Air diffuser 8 can be any type of sparger which will provide a maximum number of air bubbles in the smallest size possible, thus maximizing the air surface contact with waste material 11. Such a maximum air contact with waste material 11 is desirable as will be discussed more fully hereinafter.

Drain valve 6 is provided for periodic draining of the tank when salts and bioskeletons build up.

Operation

Waste material 11 is continuously or intermittently supplied (depending upon use conditions) to tank 2 through inlet 1. Waste material 11 will generally assume the lowermost portion of tank 2 as is best illustrated in Figure 1, maintaining a desired level therein. The waste material 11 is normally within the preferred embodiment of the apparatus of the present invention and undiluted human waste from, for example, an oil flush toilet or minimum flush toilet or like biological waste treatment system. The waste material within tank 2 is maintained at a substantially high temperature which is adjusted to accommodate a particular evaporation rate or a desired particular strain of bacteria. In the preferred embodiment, tank 2 will be maintained at a high temperature which will support thermophilic bacteria but be fatal to pathogenic strains.

In addition to the temperature controls placed on waste material 11 within tank 2, a certain amount of air contact is provided to waste material 11 through diffusers 8 in order to evaporate the moisture and maintain an aerobic biological situation. When the air from diffuser 8 passes through the heated waste material 8, it reaches near moisture saturation at the temperature of the process itself. Thus the air leaving the tank through vent 3 contains more vapor than when it entered the tank since air can hold a greatly increased amount of water vapor as its temperature rises. The air is thus effectively removing water from the liquid waste 11. The air will also normally contain a sufficient amount of oxygen so as to support the aerobic micro-organisms contained within liquid waste 11 and therefore maintain an aerobic situation.

To regulate the rate of evaporation of water from the waste material 11 contained within tank 2, either the temperature of waste material 11 or the rate of air flow through diffuser 8 can be adjusted. A bypass valve 15 may be used in combination with a constant volume output air pump 9. If desirable, a variable pressure air flow pump 9 can be utilized with a throttling valve as an alternative of embodiment of air pump 9. Multiple air pumps could provide an even greater range of evaporation rates. Air should always be supplied so that aerobic digestion can be maintained. The temperature should also be maintained over a narrow range on an hour to hour basis to insure optimum biological activity. The increase or decrease of temperature, however, may vary over a wider range as long as these precautions are observed.

When the system has not been added to for an extended time, the waste in the tank will drop to below the heating belt which is wrapped around the exterior of the tank. Without the liquid waste removing heat from the belt, the belt will become hotter and at 99°C turn off idle thermostat 13. This thermostat turns off the air source and the electricity to the heat belt until the heat belt cools to the thermostat reset temperature or, in this case, 54°C. The heat and air then slowly cycle until enough waste is added to again fill the area of the tank covered by the heat belt. During this period of intermittent heat and air, enough air is supplied to maintain an aerobic condition and enough heat is supplied to hold the temperature in the thermophilic range but very little evaporation occurs. The purpose of this control is to conserve energy, while reducing the chances of the biosystem drying out during times of reduced waste addition. The tank can therefore idle for prolonged periods of time while using a greatly reduced energy amount.

There should be access to the tank for periodic draining or clear-out. Drain value 6 allows for drainage. On large systems, a manhole (not shown) is also included.

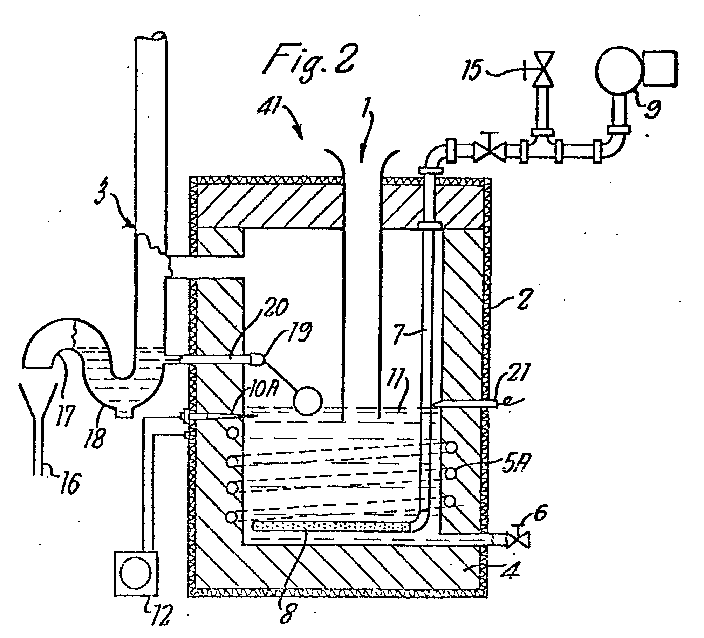

Description of Second Preferred Embodiment: A second preferred embodiment of the apparatus of the present invention, designated generally by the numeral 41 in Figure 2, is comprised of a similar fluid tight vessel 2, provided with a waste material inlet 1 and a vent outlet 3. Air can be introduced into the inside portion of the tank through an air diffuser 8 which receives air through pipe 7 from air pump 9.

Tank 2 can be provided with insulative material 4 to minimize the loss of heat from within tank 2. Tank 2 is provided with heat source 5A which can be, for example, a peripheral coil which allows heat to be transferred as necessary to the inner portion of tank 2 and thus elevate and control the temperature of any material contained therein. The heat transfer medium conducted through this peripheral coil may be water or other heat transfer fluid. It may receive its heat from an outside combustion source such as gas, LPG or fuel oil. Or it may be the cooling liquid from an internal combustion or other engine; available as waste heat at a controlled temperature appropriate for this process (60 to 85°C). Or it may be heated by passing a stream of exhaust from an internal combustion engine. Or it may be heated in a solar collector. Or it may be heated in the heating portion of a heat pump cycle, as hereinafter set forth in more particular.

The heating medium may be conveyed into the peripheral coil by an external pump, or it may be propelled by simple convection.

The temperature of waste material 11 may be sensed by temperature sensor 10A, and controlled by controller 12.

When waste heat is available at a rate well in excess of the requirements for the apparatus, the liquid level control system shown on the left side of Figure 2 may be employed. In this subsystem, condensate from vent 3 is allowed to collect in vapor trap 18. Excess condensate may pass over weir 17 and be discharged through drain 16. When a low level of waste 11 is sensed by float valve 19, condensate is allowed by the valve 19 to run into the tank via conduit 20.

In cases in which waste heat is not available, a more conservative means of controlling liquid level can be provided by liquid level controller 21, which may be selected from any of the suitable techniques obvious to those skilled in the art. Said controller would cut off or modulate the heat flux and/or air flow.

Other features of the apparatus described by Figure 2 are similar to those shown in Figure 1, and bear the same designations.

First Working Example

A device of Figure 1 was constructed to satisfy the requirements of a single family residence with six full time residents. It has been estimated that the average human discharge per toilet use is 0.23 liters, and that the average number of usages per day is seven, making a maximum daily discharge of 1.6 liters per day per full time resident or 9.6 liters per day for a family of six. It was therefore determined that a tank 2 with a capacity of 37 liters should be sufficient, thereby providing a 48 hours residence time and a 50% ullage or void volume to provide for occasional overload conditions. Other characteristics of this working example were as follows:

1. Heat source 5 was supplied by a silicone rubber heater containing an embedded nichrome heating element with a resistance of approximately 28 ohms.

2. Air was supplied from compressor 9 through a controlling and measuring system including pressure gauges and a rotometer. The air supply rate was 55 standard liters per minute (SLM) and the pressure entering the rotometer was controlled to 1.6 kg/cm$^2$.

3. Temperature monitors were placed so as to measure room temperature (supply air temperature), the temperature of waste 11, the temperature of the exhaust vapors in vent 3, the temperature of the shell outside insulation 4 and the temperature of heat source 5.

4. A watt hour meter was placed in the electrical circuit, as was an ampere meter and a volt meter.

During the first stage of the test, the voltage was set at 99 to 100 volts. The observed current was 3.47 to 3.57 amperes. The resultant power input was therefore approximately 340 to 360 watts. During a steady state period of 12 hours, the following observations were made:

1. Room temperature, 17 to 22°C
2. Waste temperature, 44 to 46°C
3. Vapor exhaust temperature, 42 to 44°C
4. Tank exterior temperature, 20 to 26°C
5. Heat source temperature, 70 to 71°C
6. Kilowatt hours consumed, 4.4 per 12 hours or 0.367/hr.
7. Waste evaporated, 2.9 liters per 12 hours or 0.24 liters per hour (5.8 liters/day).
8. Power consumption per liter of waste evaporated, 1.54 kW hr/liter, which is equivalent to 64 watts per liter on a continuous, 24 hour cycle.

Contrary to expectations, the level of efficiency for the first test was considerable below the theoretical heat input required for evaporating one liter of water. While a lower evaporation rate was expected due to the lower water capacity of the air at this temperature, there appears to be some high threshold temperature for efficient evaporation of water under the conditions of the present device. To elevate the temperature, the voltage was therefore increased to 115 volts, and the following observations were made during a steady state period of 14 hours:

1. Room temperature, 17 to 24°C
2. Waste temperature, 57 to 58°C
3. Vapor exhaust temperature, 54 to 56°C
4. Tank exterior temperature, 20 to 26°C
5. Heat source temperature, 92 to 93°C
6. Kilowatt hours consumed, 5.9 per 14 hours or 0.42 per hour
7. Waste evaporated, 6.6 liters per 14 hours or 0.47 liters per hour (11.3 liters/day)
8. Power consumption per liter of waste evaporated, 0.89 kW hr/liter, which is equivalent to 37 watts per liter on a continuous, 24 hour cycle.

It is thus seen that the evaporation efficiency is considerably greater at an operating temperature of 57 to 58°C than it was at 44 to 46°C. Further the capacity of 11.3 liters/day satisfies the 9.6 liters/day requirements of a family of six. To illustrate the theoretical maximum efficiency, the following data are presented:

Heat of vaporization of water,

at 50°C, 568.5 kcal/kg or 0.659 kW hr kg or 27.5 watts/kg, cont. duty

at 60°C. 563.2 kcal/kg or 0.653 kW hr kg or 27.2 watts/kg, cont. duty

Density of water at 50°C = 0.988

Density of water at 60°C = 0.983

Power consumption, continuous duty, corrected for the density of water:

27.2 watts/liter continuous duty at 50°C

26.7 watts/liter continuous duty at 60°C

A portion of the heat input from the above working example was required to heat the incoming 55 SLM or $7.92 \times 10^3$ liters per day of air. The specific heat of air is 0.2414 kcal/kg/°C. The density of air is $1.213 \times 10^{-3}$ kg/liter. Weight of air is 9.5 kg/day. 9.5 kg/day × 0.2414 kcal/kg/°C 30°C = 68.8 kcal/day. Converting kcal to kW hr, we find 0.0798 kW hr or 3.3 watts continuous duty.

In stage two of the first working example, power consumption was 5.9 kW hr/14 hr or 10.1 kW hr/day. The rate of evaporation is 6.6 liters per 14 hours or 11.3 liters per day. It is thus seen that the heat required for heating the air (3.3 watts cont. duty) is small compared with that required for the evaporation of the waste (11.2 liters per day × 37 = 418 watts continuous duty).

It follows that there would be a very small efficiency penalty if an excess of air were to be supplied, and that, if that air would not be as efficiently saturated there would not be a significant decrease in the operating temperature within the liquid phase of the device. This characteristic becomes important in a subsequent embodiment of this invention.

Second Working Example

A second working example was constructed from a tank with a 285 liter capacity. It was fitted with a heating coil such as shown in Figure 2. It was placed in service aboard a floating barge. This barge had a crew of 30 men, six serving as full time residents and the balance as shift workers. The waste source was a toilet of the oil flush type, with manual intermittent transfer of waste from the coalescing tank. This coalescing tank was so equipped as to shut down the system when the level of undiluted human waste reached 57 liters, at which time the waste was pumped into tank 2 through waste material inlet 1.

On the average, the waste was transferred every three days over the period of a year during which time 6,900 liters of waste were consumed, with only an occasional removal of brine.

A concern existed as to what would happen if the device were to be taken out of service and allowed to sit at room temperature under anaerobic conditions for a period of time. A four liter aliquot of the brine was removed from the second working example and stored at ambient temperature in a closed container for two months, after which time it was taken to the laboratory and examined for micro-biological activity. A portion of the aliquot was aerated and heated to 58°C. An organic waste substance was then introduced and digestion proceeded for 8 hours, after which a portion of the residual brine was subjected to a 5 day BOD test. The BOD test indicated that the organic waste had been metabolized. It was therefore determined that it would be possible to stop and restart the evaporator if an intermittent duty cycle, or intermittent heat source should so dictate.

Evaporation and Digestion of Wastes from Foam Flush Toilets

The working example described above (Fig. 1) has been tested with the waste from the foam flush toilet taught by Miya. This toilet system seemed particularly suitable for the device of the present invention, since it uses a maximum of 115 milliliters of water to produce the foam employed in each flush and is not limited by the numerous complexities attendant upon the oil flush toilet. It was known that the foaming agent was highly biodegradable and it was anticipated that the high rate of metabolism of the thermophilic aerobic bacteria would maintain a concentration of foaming agent low enough so that foaming problems would not occur.

However, in practice excessive foam occurred intermittently. While the excess foam can be controlled with conventional methods, e.g. anti-foaming agents, pH control, etc., it was considered desirable to make design adjustments which would overcome the intermittent foaming problem without the use of these artificial expedients.

As hereinbefore set forth, the air flow is used for two separate purposes, to evaporate the water and to maintain aerobic biological activity. The requirements for evaporation are straight forward and are directly related to the saturation pressure of water in air at elevated temperatures.

The requirements for air for the aerobic bacterial activity are not as straight forward, and various literature sources yield widely different results. In order to estimate the requirements, however, reference is made to "A Study of Sludge Handling and Disposal", U.S. Department of the Interior, Federal Water Control Administration. This reference suggests that sludge digestion air requirements are 15 to 20 cubic feet per minute of air per 1,000 ft³ of waste volume in the digestor (15 to 20 liters air per minute per 1,000 liters of waste). The wastes in this report are, however, highly dilute since they include high volumes of flushing water plus an admixture of other domestic waste waters. Assuming that the wastes from the foam flush toilet are 30 to 40 times as concentrated, the air requirements would be 450 to 800 liters per minute per 1,000 liters of waste. In the above working example the normal working capacity of the sludge tank 2 is 18 liters. Therefore, based upon the Department of Interior data, an air flow rate of 5 to 14 liters per minute should be sufficient to maintain aerobic biological activity.

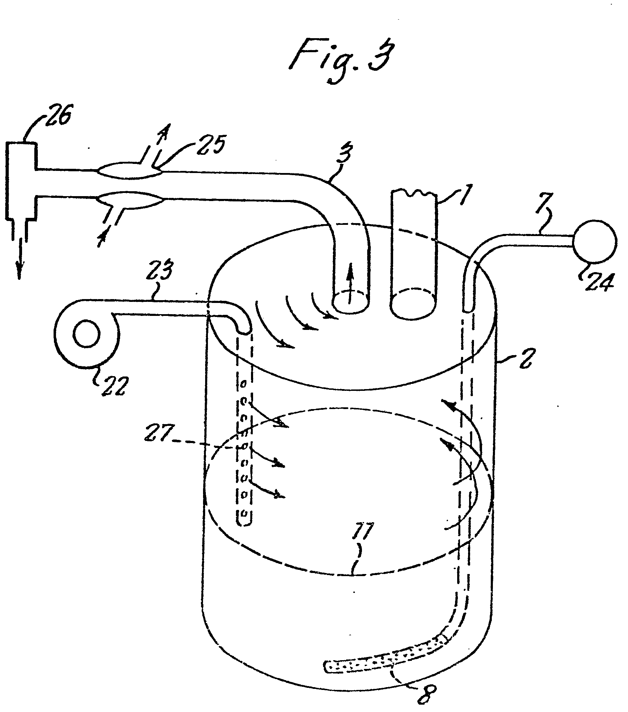

In order to overcome the intermittent foaming problem mentioned above, an alternate design of tank 2 was tested in which the air flow through diffuser 8 was reduced to 8 liters per minute. This flow is provided by use of a simple and trouble free aquarium pump 24, or other low volume, low pressure pump operated continuously to maintain aerobic activity. Figure 3 shows an isometric drawing of this device. In order to supply the additional air required to effect evaporation, a centrifugal blower 22 intermittently provides the balance of the air through tangential orifices 27 in air inlet 23. The air is then permitted to circulate spirally, become saturated with moisture and to escape through vent outlet 3, centrally located in the top of the tank. A density gradient is generated, thereby improving the efficiency of evaporation. This density gradient is dependent upon two phenomena; low temperature, low water content air is introduced at the periphery of the tank by the tangential air inlet 23; then, as the air passes toward the axis of the tank, its temperature and water content both increase. Each of these phenomena decrease the density of the vapors thereby increasing the propensity for the warm, saturated air to escape from the vent 3, rather than the cooler, lower water content air.

The device of Figure 3 requires less maintenance because the centrifugal blower 22 is much simpler and trouble free than the air pump 9. While the effluent air is not as near saturation, or has a higher temperature differential from the waste than shown in the above "working example", the heat loss is low due to the low heat capacity of air, as shown in a previous section.

In order to improve the thermal efficiency of the device of the present invention, for applications in which waste heat sources are unavailable, numerous avenues were investigated to recover some of the heat consumed in the process of evaporation. While multistage evaporation, vapor recompression and similar techniques could, in theory, be adapted to this application, the increased complexity would not be justified. However, it is relatively simple to recover heat from a saturated gas stream at elevated temperatures by causing the water to condense at a lower temperature and thereby release the latent heat of condensation. This process shown in Figure 3 can be accomplished by passing the exhaust gases from vent outlet 3 through heat exchanger 25 (such as a plate coil), and thence to exhaust fan 26 (chemical fume exhaust blower or other blower designed to be inert to air with entrained water). The heat exchanger 25 can be used to preheat incoming city water for use in a domestic water heater, or the heat may be rejected to a swimming pool or "Spa". It may be coupled for single pass operations or it may reject its heat into an intermediate preheating tank; it may be convection fed or the heat transfer fluid may be pumped.

Efficiencies can likewise be effected in the heating cycle of the device of Figure 2. For example, peripheral coil 5A can be the condensor coil of a heat pump system. The heat pump evaporator can then be employed for air conditioning, refrigeration or other chilling applications with the waste evaporator 41 serving as an efficient, relatively low temperature heat sink for the chilling cycle.

Combining the abovementioned techniques for reducing heat input and recovering thermal discharge, it is possible to operate the system with little net energy consumption. This is not to say that the device alters the rules of thermodynamics, but merely that otherwise required beneficial effects are achieved with the resultant sources of heating and cooling. Further, under the conditions of digestion of the present invention, the heat generated by the metabolism of the organic substances liberates an amount of heat roughly proportional to the concentration of said organic substances, usually in the range of 5% of the total mass of the waste. In the conservative system just above described, this small increment of heat becomes a significant factor in the economics of operation.

While certain of these economies would not be practical in very small installations, systems designed for larger facilities such as hotels, apartment houses, spas, restaurants, office buildings and factories can apply the chilling and pre-heating to beneficial usages elsewhere within the total system.

In single family facilities, it has been found possible to reduce the costs of operating the embodiment of Figure 1 substantially by operating the electrical heaters only during those late night hours when electrical power charges are reduced. In some cases the charges between 11.00 PM and 6.00 AM for example, are only one-third of those charged during the balance of the day.

**Claims**

1. A process for disposing of organic waste material (11) wherein the said material is subjected in a treatment vessel (2) to digestion by thermophilic bacteria with controlled heating and aeration characterized in that said heating and aeration are carried out simultaneously with evaporation of water from the treated waste, air being brought into contact with said waste material (11) at a rate sufficient to remove water by evaporation from said vessel (2) at a rate at least equal to the combined rate of introduction of water and formation thereof by aerobic digestion of the waste material.

2. A process according to Claim 1 characterized by the steps of discharging excess gases from the vessel (2) and removing the water contained with the discharged gases.

3. A process according to Claim 1 or Claim 2 characterized in that the waste material in said vessel (2) is heated to a temperature of at least 58°C but below 100°C.

4. A process according to any one of Claims 1 to 3 characterized in that exhaust gases from the vessel are removed through a vent outlet (3), these gases being cooled and/or condensed by a heat exchanger (25) and the heat thus recovered being recycled.

5. A process according to any preceding Claim characterized in that the temperature of the waste material in the vessel (2) is monitored by a temperature sensor (10A) connected to a thermostat (12), the supply of heat to the waste material being controlled by said thermostat in response to the temperatures sensed by said sensor.

6. A process according to any preceding Claim wherein the level of liquid in the vessel (2) is monitored by a liquid level controller (21), said controller operating to cut off or modulate the supply of heat and/or air to the waste material.

7. A process according to any preceding Claim characterized in that the air is supplied to the waste material by a low pressure pump or blower (24) arranged to blow air through a duct (7) to an air defuser (8) submerged in said waste material.

**Patentansprüche**

1. Verfahren zur Beseitigung von organischem Abfall (11), bei dem der Abfall in einem Behandlungsbehälter (2) durch thermophile Bakterien unter geregelter Erwärmung und Belüftung zersetzt bzw. ausgefault wird, dadurch gekennzeichnet, daß die Erwärmung und die Belüftung gleichzeitig mit einer Verdampfung von Wasser aus dem behandelten Abfall durchgeführt werden, wobei Luft mit einer Geschwindigkeit, die ausreicht, um Wasser aus dem Behandlungsbehälter (2) durch Verdampfung mit einer Geschwindigkeit zu entfernen, die mindestens gleich der Gesamtgeschwindigkeit der Einführung von Wasser und der Bildung von Wasser durch aerobe Zersetzung des Abfalls ist, mit dem Abfall (11) in Berührung gebracht wird.

2. Verfahren nach Anspruch 1, gekennzeichnet durch die Schritte des Ablassens von überschüssigen Gasen aus dem Behandlungsbehälter (2) und der Entfernung des in den abgelassenen Gasen enthaltenen Wassers.

3. Verfahren nach Anspruch 1 oder 2, dadurch gekennzeichnet, daß der Abfall in dem Behandlungsbehälter (2) auf eine Temperatur von mindestens 58°C, jedoch weniger als 100°C, erwärmt wird.

4. Verfahren nach einem der Ansprüche 1 bis 3, dadurch gekennzeichnet, daß die Abgase aus dem Behandlungsbehälter durch eine Entlüftungsöffnung (3) hindurch entfernt werden, daß diese Abgase durch einen Wärmetauscher (25) abgekühlt und/oder kondensiert werden und daß die auf diese Weise zurückgewonnene Wärme in den Kreislauf zurückgeführt wird.

5. Verfahren nach einem der vorhergehenden Ansprüche, dadurch gekennzeichnet, daß die Temperatur des Abfalls in dem Behandlungsbehälter (2) durch einen mit einem Thermostaten (12) verbundenen Temperaturfühler (10A) überwacht wird, wobei die Zufuhr von Wärme zu dem Abfall durch den Thermostaten in Abhängigkeit von den durch den Temperaturfühler ermittelten Temperaturen geregelt wird.

6. Verfahren nach einem der vorhergehenden Ansprüche, bei dem der Flüssigkeitsspiegel in dem Behandlungsbehälter (2) durch eine Flüssigkeitsspiegel-Regeleinrichtung (21) überwacht wird, wobei diese Regeleinrichtung die Funktion hat, die Zufuhr von Wärme und/oder Luft zu dem Abfall zu unterbrechen oder zu regulieren.

7. Verfahren nach einem der vorhergehenden Ansprüche, dadurch gekennzeichnet, daß die Luft dem Abfall durch eine Niederdruckpumpe oder ein Gebläse (24) zugeführt wird, wobei die Niederdruckpumpe oder das Gebläse so angeordnet ist, daß Luft durch eine Leitung bzw. einen Kanal (7) hindurch zu einem in den Abfall eingetauchten Luftverteiler (8) geblasen wird.

**Revendications**

1. Procédé d'évacuation d'une matière organique qui consiste à soumettre dans un récipient de traitement, ladite matière à une digestion par des bactéries thermophiles avec un chauffage et une aération contrôlés, caractérisé en ce que ledit chauffage et ladite aération sont réalisés simultanément avec évaporation d'eau de la matière résiduaire traitée, l'air étant mis en contact avec ladite matière résiduaire en proportion suffisante pour éliminer dudit récipient l'eau par évaporation en quantité au moins égale à la quantité combinée d'eau introduite et d'eau formée par digestion aérobie de la matière résiduaire.

2. Procédé selon la revendication 1, caractérisé par les étapes d'évacuation des gaz en excès du récipient, et de séparation de l'eau.

contenue dans les gaz évacués.

3. Procédé selon la revendication 1 ou 2, caractérisé en ce que la matière résiduaire présente dans ledit récipient est chauffée à une température d'au moins 58°C mais inférieure à 100°C.

4. Procédé selon l'une quelconque des revendications 1 à 3, caractérisé en ce que des gaz d'échappement du récipient sont évacués par une sortie de ventilation, ces gaz étant refroidis et/ou condensés par un échangeur de chaleur et la chaleur ainsi récupérée étant recyclée.

5. Procédé selon l'une quelconque des revendications précédentes, caractérisé en ce que la température de la matière résiduaire présente dans le récipient est contrôlée à l'aide d'un détecteur de température connecté à un thermostat, l'apport de chaleur à la matière résiduaire étant réglé par ledit thermostat en réponse aux températures détectées par ledit détecteur.

6. Procédé selon l'une quelconque des revendications précédentes, selon lequel on contrôle le niveau du liquide dans le récipient par un régulateur de niveau de liquide, ledit régulateur fonctionnant pour arrêter ou moduler l'apport de chaleur et/ou d'air à la matière résiduaire.

7. Procédé selon l'une quelconque des revendications précédentes, caractérisé en ce que l'air est fourni à la matière résiduaire à l'aide d'une pompe à basse pression ou d'un ventilateur agencé pour envoyer de l'air par un conduit dans un diffuseur d'air immergé dans ladite matière résiduaire.

0014722

Fig.1

Fig.4

Fig. 2

## Fig. 3